# EUROPÄISCHE PATENTSCHRIFT

(11) **EP 0 890 528 B1**
(45) Veröffentlichungstag und Bekanntmachung des Hinweises auf die Patenterteilung: **10.04.2002**
(21) Anmeldenummer: 98112324.3
(22) Anmeldetag: 03.07.1998
(51) Int. Cl.: B65D 88/12, B65D 90/16

(54) **Mehrweg-Transportgestell zum Transport zylinderförmiger Transportgüter**
Reusable transport structure for transporting cylindrical goods
Dispositif de transport réutilisable pour le transport de biens cylindriques

(30) Priorität: 09.07.1997 DE 19729363
(43) Veröffentlichungstag der Anmeldung: 13.01.1999
(73) Patentinhaber: HT TROPLAST AG, 53840 Troisdorf (DE)
(72) Erfinder: Santa-Ollala, Rodolfo Dipl.-Ing., 53844 Troisdorf (DE); Eschrich, Ralf Dipl.-Ing., 53773 Hennef (DE)

(56) Entgegenhaltungen:
- WO-A-81/02719
- DE-U- 29 506 154
- GB-A- 2 147 276
- US-A- 5 494 182

## Beschreibung

### Technisches Gebiet

Die Erfindung betrifft ein Mehrweg-Transportgestell nach dem Oberbegriff des Anspruchs 1 mit einem Gestellunterteil sowie zwei parallel zueinander und in Längsrichtung des Mehrweg-Transportgestells verlaufenden Seitenwänden und einer Transportgut-Aufnahme in Form eines Hängetuchs zum Transport eines insbesondere zylinderförmigen Transportgutes, wobei die Seitenwände in der Art gelenkig mit dem Gestellunterteil verbunden sind, daß sie eine Transportstellung, in der die Seitenwände etwa senkrecht zu dem Gestellunterteil verlaufen, und eine Entladestellung einnehmen können, in der die Seitenwände leicht nach außen geneigt im stumpfen Winkel zu dem Gestellunterteil verlaufen.

Mehrweg-Transportgestelle der eingangs genannten Art dienen insbesondere zum Transport druckempfindlicher, zylinderförmiger Güter wie z. B. Rollen aus Polyvinylbutyral-Folien, wie sie als Verbundfolien in Verbundsicherheits-Glasscheiben eingesetzt werden.

### Stand der Technik

Ein gattungsgemäßes Mehrweg-Transportgestell, bei dem als Transportgut-Aufnahme ein im oberen Bereich der Seitenwände befestigten Hängetuch für den hängenden Transport des insbesondere zylinderförmigen Transportgutes verwendet wird, ist aus der DE 295 06 154 U bekannt. Ein Nachteil bei diesem gattungsgemäßen Mehrweg-Transportgestell besteht darin, daß das Hängetuch durch das zylinderförmige Transportgut so stark belastet wird, daß die Seitenwände nur dann nach außen in die Entladeposition weggeklappt werden können, wenn das Hängetuch durch Anheben der Ladung vollständig entlastet wird. Zum Entladen des Mehrweg-Transportgestelles muß somit zunächst die Ladung etwas angehoben werden, anschließend können die Seitenwände von einer zweiten Person in die Entladestellung geklappt und im nächsten Schritt das Transportgut vollständig dem Mehrweg-Transportgestell entnommen werden.

### Aufgabe

Aufgabe der vorliegenden Erfindung ist es, ein gattungsgemäßes Mehrweg-Transportgestell so fortzubilden, daß die Ent- und Beladung vereinfacht wird.

### Darstellung der Erfindung

Die Erfindung löst diese Aufgabe durch ein gattungsgemäßes Mehrweg-Transportgestell, bei dem Federn vorgesehen sind, die die Seitenwände bei Entlastung der Transportgut-Aufnahme in die Entladestellung und bei Belastung der Transportgut-Aufnahme in die Transportstellung bewegen.

Auf diese Weise ist es möglich, ein erfindungsgemäßes Mehrweg-Transportgestell durch eine Person in kürzester Zeit zu be- und entladen. Beim Anheben des zylinderförmigen Transportgutes, z. B. mittels eines Gabelstaplers mit einem Aufnahmedorn, wird die Transportgut-Aufnahme entlastet. Hierdurch können die in den Eckholmen des Gestellunterteils vorgesehenen Federn die gelenkig mit dem Gestellunterteil verbundenen Seitenwände nach oben drücken. Da die Seitenwände hierbei automatisch in die Entladestellung geführt werden, in der die Seitenwände leicht nach außen geneigt im stumpfen Winkel zu dem Gestellunterteil verlaufen, öffnet sich quasi das Mehrweg-Transportgestell zur leichten und gefahrlosen Entnahme des Transportgutes. Die Erfindung wird nachfolgend anhand eines Ausführungsbeispiels sowie der Figuren näher beschrieben.

### Kurze Beschreibung der Zeichnung

Es zeigen dabei
- Fig. 1: eine perspektivische Ansicht des erfindungsgemäßen Mehrweg-Transportgestells;
- Fig. 2: eine Seitenansicht des Mehrweg-Transportgestells in Transportstellung;
- Fig. 3: eine Seitenansicht des Mehrweg-Transportgestells im zusammengeklappten Zustand;
- Fig. 4: eine Seitenansicht des Mehrweg-Transportgestells in Entladestellung;
- Fig. 5: eine Detailansicht des Federmechanismus.

### Bester Weg zur Ausführung der Erfindung

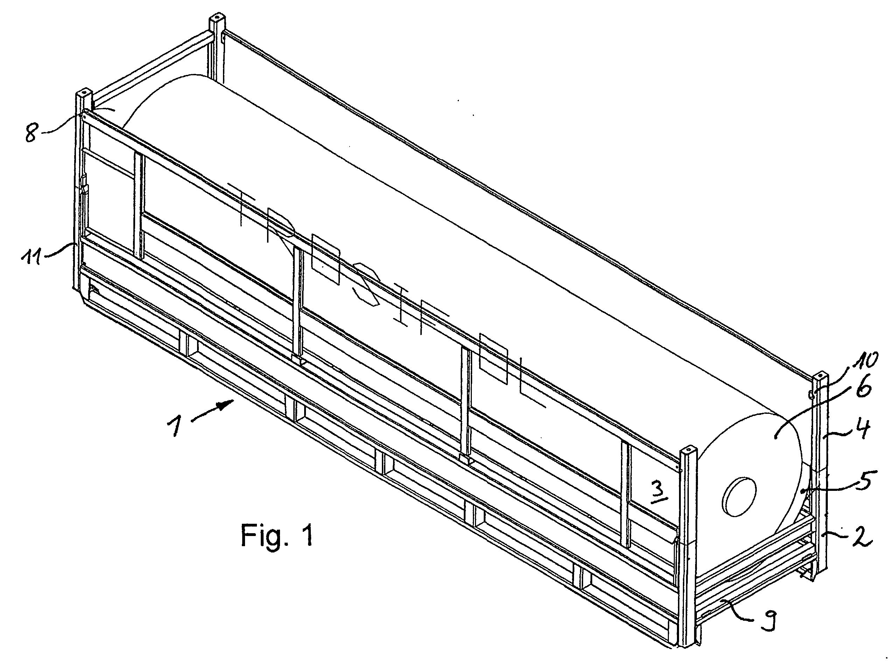

In Fig. 1 ist das erfindungsgemäße Mehrweg-Transportgestell 1 in perspektivischer Ansicht im beladenen Zustand, d. h. in Transportstellung dargestellt. Es besteht im wesentlichen aus dem Gestellunterteil 2, den Seitenwänden 3, 4, einem im oberen Bereich der Seitenwände 3,4 befestigten Hängetuch 5 als Transportgut-Aufnahme, einer Rückwand 8 sowie der vorderen Stirnwand 9. Die Rückwand 8 und die Stirnwand 9 sind in an sich bekannter Weise gelenkig mit dem Gestellunterteil 2 verbunden. Durch leichtes Anheben können diese aus an den Seitenwänden 3, 4 angebrachten Zapfen 10 ausgehängt und unter das Transportgut 6 geschoben werden. In Fig. 1 ist die vordere Stirnwand 9 in dieser Position dargestellt.

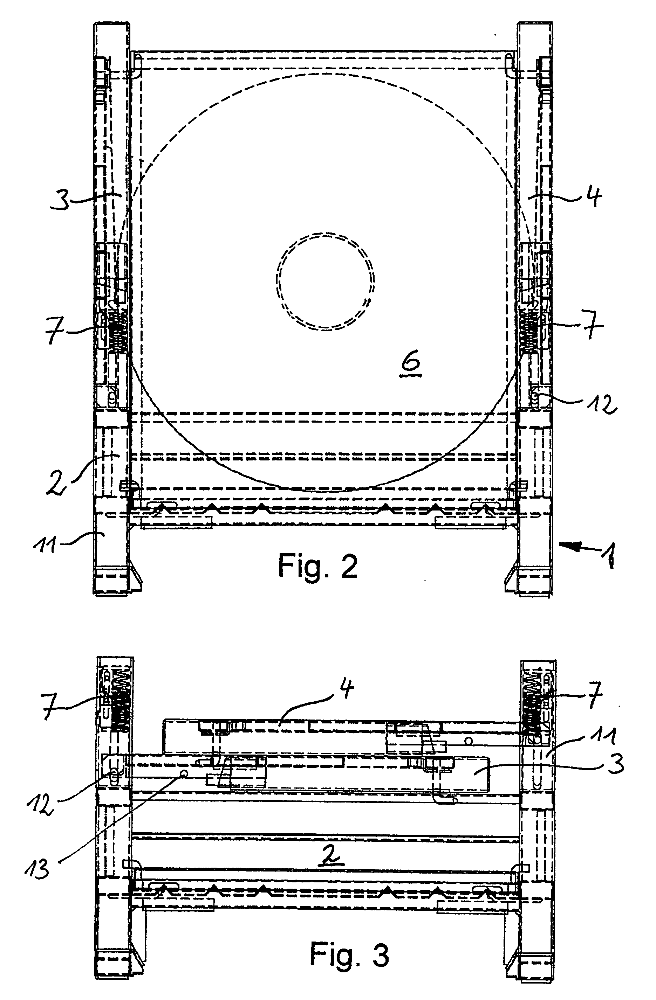

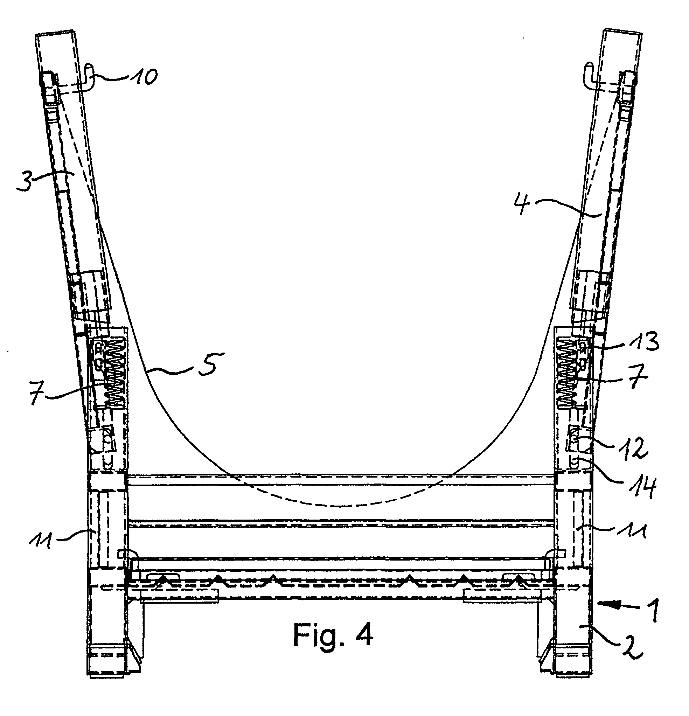

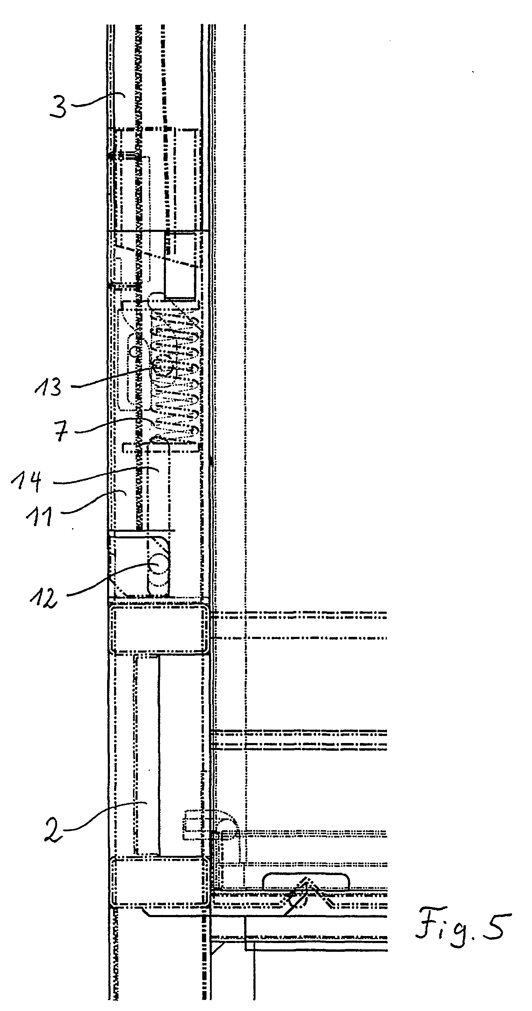

In den Fig. 2 bis 4 und in Fig. 5 ist der erfindungsgemäße Federmechanismus näher dargestellt. Das Gestellunterteil 2 weist an den vier Seiten stabile Eckholme 11 auf, die etwa die Hälfte der Transportgestell-Höhe einnehmen. In diesen Eckholmen 11 sind Schraubenfedern 7 eingelassen, die im oberen Bereich von einer Deckkappe abgedeckt sind. Durch Druck auf diese Deckkappe wird die Feder 7 entsprechend zusammengedrückt. Die Seitenwände 3, 4 weisen seitlich jeweils zwei Führungszapfen 12, 13 auf, wovon der untere Führungszapfen 12 in einem Langloch 14 des Eckholmes 11 und der obere Führungszapfen 13 in einer nach außen gerichteten Zapfenführung geführt werden. Auf diese Weise werden die Seitenwände 3, 4 beim Anheben automatisch leicht nach außen in die Entladeposition bewegt (Fig. 4). Die Federn 7 sind dabei so bemessen, daß sie bei Entlastung des Hängetuchs 5, also beim Anheben des Ladegutes 6, die Seitenwände 3, 4 bis in die Entladeposition anheben.

Die Führung der Seitenwände 3, 4 in den Eckholmen 11 ist so gewählt, daß die Seitenwände 3, 4 über die Entladestellung hinaus weiter angehoben werden können. In dieser Stellung verläßt der obere Führungszapfen 13 die obere Zapfenführung, so daß die Seitenwände 3, 4 nur noch durch den unteren Führungszapfen 12 in dem Langloch 14 gehalten werden und nach innen geklappt werden können, wie in Fig. 3 dargestellt. In dieser zusammengeklappten Position können die Mehrweg-Transportgestelle 1 platzsparend zurückbefördert werden.

### Legende

- 1.: Mehrweg-Transportgestell
- 2.: Gestellunterteil
- 3.: Seitenwand
- 4.: Seitenwand
- 5.: Hängetuch
- 6.: Transportgut
- 7.: Feder
- 8.: Rückwand
- 9.: vordere Stirnwand
- 10.: Zapfen
- 11.: Eckholme
- 12.: unterer Führungszapfen
- 13.: oberer Führungszapfen
- 14.: Langloch

## Patentansprüche

1. Mehrweg-Transportgestell (1) mit
• einem Gestellunterteil (2) sowie
• zwei parallel zueinander und in Längsrichtung des Mehrweg-Transportgestells (1) verlaufenden Seitenwänden (3,4),
• und einer Transportgut-Aufnahme in Form eines Hängetuchs (5) zum Transport eines insbesondere zylinderförmigen Transportgutes (6),
• wobei die Seitenwände (3,4) in der Art gelenkig mit dem Gestellunterteil (2) verbunden sind, daß sie
• eine Transportstellung einnehmen können, in der die Seitenwände (3,4) etwa senkrecht zu dem Gestellunterteil (2) verlaufen, und
• eine Entladestellung einnehmen können, in der die Seitenwände (3,4) leicht nach außen geneigt im stumpfen Winkel zu dem Gestellunterteil (2) verlaufen,
**dadurch gekennzeichnet, daß** die Seitenwände (3,4) durch entsprechende Federn 7 bei Entlastung der Transportgut-Aufnahme in die Entladestellung und bei Belastung des Hängetuchs (5) in die Transportstellung bewegt werden.

2. Mehrweg-Transportgestell (1) nach Anspruch 1, **dadurch gekennzeichnet, daß** das transportgutaufnehmende Hängetuch (5) im oberen Bereich der Seitenwände (3,4) befestigt ist.

## Claims

1. Reusable transporting framework (1) having
• a bottom framework part (2) and
• two side walls (3, 4) which run parallel to one another in the longitudinal direction of the reusable transporting framework (1), and
• a transportable-item mount in the form of a suspension sheet (5) for transporting an, in particular, cylindrical transportable item (6),
• it being the case that the side walls (3, 4) are connected in an articulated manner to the bottom framework part (2) such that they
• can assume a transporting position, in which the side walls (3, 4) run approximately perpendicularly to the bottom framework part (2), and
• can assume an unloading position, in which the side walls (3, 4) are inclined slightly outwards at an obtuse angle to the bottom framework part (2),
**characterized in that** the side walls (3, 4) can be moved by corresponding springs (7) into the unloading position, when the transportable-item mount is relieved of loading, and into the transporting position, when the suspension sheet (5) is subjected to loading.

2. Reusable transporting framework (1) according to Claim 1, **characterized in that** the suspension sheet (5), which accommodates the transportable item, is fastened in the top region of the side walls (3, 4).

## Revendications

1. Châssis de transport multivoies (1) comprenant
• une partie inférieure de châssis (2) ainsi que
• deux parois latérales (3, 4) s'étendant parallèlement l'une à l'autre et dans la direction longitudinale du châssis de transport multivoies (1),
• et un réceptacle de marchandises à transporter en forme de toile suspendue (5) pour transporter une marchandise à transporter (6) en particulier de forme cylindrique,
• les parois latérales (3, 4) étant reliées de manière articulée avec la partie inférieure du châssis (2) de telle sorte qu'elles puissent
• prendre une position de transport, dans laquelle les parois latérales (3, 4) s'étendent approximativement verticalement par rapport à la partie inférieure du châssis (2), et
• prendre une position de déchargement, dans laquelle les parois latérales (3, 4) sont légèrement inclinées vers l'extérieur suivant un angle obtus par rapport à la partie inférieure du châssis (2),
**caractérisé en ce que** les parois latérales (3, 4) sont déplacées par des ressorts correspondants (7) lors du délestage du réceptacle de marchandises à transporter dans la position de déchargement et lors du chargement de la toile suspendue (5) dans la position de transport.

2. Châssis de transport multivoies (1) selon la revendication 1, **caractérisé en ce que** la toile suspendue (5) recevant les marchandises à transporter est fixée dans la partie supérieure des parois latérales (3, 4).
